(19) Europäisches Patentamt
European Patent Office
Office européen des brevets

(11) **EP 3 666 806 A1**

# EUROPEAN PATENT APPLICATION
published in accordance with Art. 153(4) EPC

(43) Date of publication:
**17.06.2020 Bulletin 2020/25**

(21) Application number: **18843369.2**

(22) Date of filing: **25.06.2018**

(51) Int Cl.:
*C08F 220/18* *(2006.01)*    *C08F 2/38* *(2006.01)*
*C08F 2/48* *(2006.01)*    *C09J 4/02* *(2006.01)*
*C09J 133/14* *(2006.01)*

(86) International application number:
**PCT/JP2018/024013**

(87) International publication number:
**WO 2019/031084 (14.02.2019 Gazette 2019/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.08.2017   JP 2017154808**

(71) Applicant: **Sekisui Fuller Company, Ltd.
Tokyo 108-0075 (JP)**

(72) Inventors:
• **KUWABARA, Shoji**
  **Hamamatsu-shi**
  **Shizuoka 430-0834 (JP)**
• **KAWABATA, Kazuhiro**
  **Hamamatsu-shi**
  **Shizuoka 430-0834 (JP)**
• **TODA, Tomoki**
  **Mishima-gun**
  **Osaka 618-0021 (JP)**

(74) Representative: **Ter Meer Steinmeister & Partner
Patentanwälte mbB
Nymphenburger Straße 4
80335 München (DE)**

(54) **ULTRAVIOLET-CURABLE ACRYLIC POLYMER, PRODUCTION METHOD THEREFOR, AND ULTRAVIOLET-CURABLE HOT-MELT ADHESIVE**

(57)    The present invention provides an ultraviolet-curable acrylic polymer that exhibits excellent adhesive properties irrespective of the surface roughness of an adherend, that exhibits excellent thermal stability, excellent coatability, and excellent adhesive properties, and that is usable as an ultraviolet-curable hot-melt adhesive. The ultraviolet-curable acrylic polymer of the present invention comprises: a (meth)acrylate unit not intramolecularly having an ultraviolet reactive group or a carboxy group; and a monomer unit intramolecularly having an ultraviolet reactive group in a prescribed amount, respectively, wherein the polymer contains a prescribed amount of a (meth)acrylate unit serving as a main unit of the (meth)acrylate unit not intramolecularly having an ultraviolet reactive group or a carboxy group, has, at an end, a residue of a thiol compound, has a predetermined range of a molecular-weight distribution, and exhibits a predetermined range of a post-curing gel fraction, exhibits a predetermined range of a change ratio in terms of weight-average molecular weight after heating, and exhibits a predetermined range of a post-ultraviolet-curing tensile-shear strain tanθ.

EP 3 666 806 A1

**Description**

Technical Field

The present invention relates to an ultraviolet-curable acrylic polymer, a method for producing the ultraviolet-curable acrylic polymer, and an ultraviolet-curable hot-melt adhesive.

Background Art

Acrylic adhesives, which are used for, for example, adhesive tapes, consumer product labels, and sticky notes, are also used for, due to their advantages of transparency, heat resistance, and weather resistance, optical displays of electronic devices such as personal computers, smartphones, televisions, and digital cameras, for example. Thus, acrylic adhesives are used in various applications. Such acrylic adhesives are required to have different adhesive properties depending on the applications, and acrylic adhesives are required to have desired adhesive properties in accordance with the applications.

In these years, in order to improve the usage environment, solvent-free adhesives have been recommended, and acrylic adhesives have come to be increasingly provided as hot-melt adhesives. Hot-melt adhesives do not require a drying step for a step of applying the adhesives to tapes or labels. Thus, hot-melt adhesives do not require the equipment for the drying step, and markedly contributes to a reduction in energy consumption.

It is difficult to provide existing thermoplastic acrylic adhesives so as to exhibit desired adhesive properties in accordance with the applications. In these years, developments have been underway for ultraviolet-curable hot-melt adhesives that are subjected to a cross-linking reaction caused by ultraviolet radiation so as to exhibit desired adhesive properties in accordance with the applications.

Patent Literature 1 discloses, as an ultraviolet-curable hot-melt adhesive, an ultraviolet-curable hot-melt adhesive composition that contains a vinyl-based copolymer (A) having a glass transition temperature of -5°C or less and a weight-average molecular weight of 50000 to 350000. In the ultraviolet-curable hot-melt adhesive composition, the vinyl-based copolymer (A) is obtained by polymerizing specific monomer components as constituent components.

Patent Literature 2 discloses a composition for being used as a molten substance for a process, the composition including polyacrylate and a stabilizing agent having at least one phosphite group.

Citation List

Patent Literature

[PTL 1] Japanese Unexamined Patent Application Publication No. 2006-299017
[PTL 2] Japanese Unexamined Patent Application Publication No. 2001-253995

Summary of Invention

Technical Problem

Ultraviolet-curable hot-melt adhesives preferably exhibit good adhesive properties for any adherends. In these years, in particular, consumer product labels are often affixed to decorative surfaces of containers. In order to provide the surfaces of containers with various types of decoration, such containers are formed of a wide variety of materials. Such decorative surfaces of containers have various surface roughnesses.

Even when an adherend, such as a container, is formed of the same material, different surface roughnesses in the adherend may result in considerably different adhesive properties exhibited by an ultraviolet-curable hot-melt adhesive.

Thus, there has been a demand for an ultraviolet-curable hot-melt adhesive that exhibits desired adhesive properties for adherends formed of various materials and having various surface roughnesses.

Such an ultraviolet-curable hot-melt adhesive is used by being applied, while being kept in a molten state, onto an adherend or a support. Thus, the adhesive in a molten state is exposed to high temperature for a long time. The above-described ultraviolet-curable hot-melt adhesive composition has low thermal stability in a molten state, and deteriorates due to heat in the molten state. As a result, the ultraviolet-curable hot-melt adhesive composition gelates, which causes problems of degradation of coatability and occurrence of clogging in the piping within the coating machine. In addition, the curability of the ultraviolet-curable hot-melt adhesive composition degrades, and the cured ultraviolet-curable hot-melt adhesive composition does not exhibit desired adhesive properties, which is problematic.

In the composition disclosed in PTL 2, a stabilizing agent having a phosphite group is added to an ultraviolet-curable acrylic polymer to thereby enhance the storage stability of the ultraviolet-curable acrylic polymer.

However, addition of the stabilizing agent causes a problem of degradation of curability of the composition upon irradiation with ultraviolet radiation, and causes another problem of low production efficiency resulted from the necessity of a step of mixing the stabilizing agent.

The present invention provides an ultraviolet-curable acrylic polymer that exhibits excellent adhesive properties irrespective of surface roughnesses of adherends, that does not require a stabilizing agent, that has excellent thermal stability and excellent coatability in a molten state, and that is usable as an ultraviolet-curable hot-melt adhesive to be cured to exhibit desired adhesive properties. Solution to Problem

An ultraviolet-curable acrylic polymer according to the present invention comprises 89.65 to 99.75 mass% of a (meth)acrylate unit not intramolecularly having an ultraviolet reactive group or a carboxy group and 0.15 to 0.35 mass% of a monomer unit intramolecularly having an ultraviolet reactive group, contains 70 mass% or more of a (meth)acrylate unit serving as a main unit of the (meth)acrylate unit not intramolecularly having an ultraviolet reactive group or a carboxy group, wherein the polymer has, at an end, a residue of a thiol compound serving as a chain transfer agent, has a molecular-weight distribution of 4.1 to 6.1, is cross-linkable by irradiation with ultraviolet radiation, and exhibits a post-ultraviolet-curing gel fraction of 55 to 70 mass%, exhibits a change ratio of -20% to 20% in terms of standard-polystyrene-equivalent weight-average molecular weight after heating at 150°C for 6 hours, and exhibits a post-ultraviolet-curing tensile-shear strain tanθ of 2.0 to 6.5.

In other words, the ultraviolet-curable acrylic polymer according to the present invention is an ultraviolet-curable acrylic polymer being cross-linkable by irradiation with ultraviolet radiation, exhibiting a change ratio of -20% to 20% in terms of standard-polystyrene-equivalent weight-average molecular weight after heating at 150°C for 6 hours, exhibiting a post-ultraviolet-curing tensile-shear strain tanθ of 2.0 to 6.5, and including 89.65 to 99.75 mass% of a (meth)acrylate unit not intramolecularly having an ultraviolet reactive group or a carboxy group, and 0.15 to 0.35 mass% of a monomer unit intramolecularly having an ultraviolet reactive group, wherein the polymer contains 70 mass% or more of a (meth)acrylate unit serving as a main unit of the (meth)acrylate unit not intramolecularly having an ultraviolet reactive group or a carboxy group, has, at an end, a residue of a thiol compound serving as a chain transfer agent, has a molecular-weight distribution of 4.1 to 6.1, and exhibits a post-ultraviolet-curing gel fraction of 55 to 70 mass%.

Advantageous Effects of Invention

An ultraviolet-curable acrylic polymer according to the present invention has such features and, as a result, exhibits excellent adhesive properties irrespective of surface roughnesses of adherends, has excellent thermal stability and excellent coatability in a molten state, is cured to exhibit desired adhesive properties, and is usable as an ultraviolet-curable hot-melt adhesive.

Description of Embodiments

An ultraviolet-curable acrylic polymer according to the present invention is an ultraviolet-curable acrylic polymer being cross-linkable by irradiation with ultraviolet radiation, exhibiting a change ratio of -20% to 20% in terms of standard-polystyrene-equivalent weight-average molecular weight after heating at 150°C for 6 hours, exhibiting a post-ultraviolet-curing tensile-shear strain tanθ of 2.0 to 6.5, and including 89.65 to 99.75 mass% of a (meth)acrylate unit not intramolecularly having an ultraviolet reactive group or a carboxy group, and 0.15 to 0.35 mass% of a monomer unit intramolecularly having an ultraviolet reactive group, wherein the polymer contains 70 mass% or more of a (meth)acrylate unit serving as a main unit of the (meth)acrylate unit not intramolecularly having an ultraviolet reactive group or a carboxy group, has, at an end, a residue of a thiol compound serving as a chain transfer agent, has a molecular-weight distribution of 4.2 to 6.0, and exhibits a post-ultraviolet-curing gel fraction of 55 to 70 mass%.

An ultraviolet-curable acrylic polymer according to the present invention is provided such that the change ratio of weight-average molecular weight Mw is -20% to 20%. As a result, it has excellent thermal stability and excellent coatability in a molten state, and exhibits desired adhesive properties after being cured by irradiation with ultraviolet radiation.

In the ultraviolet-curable acrylic polymer, the change ratio of standard-polystyrene-equivalent weight-average molecular weight after heating at 150°C for 6 hours is -20% to 20%, preferably -15% to 15%, more preferably -10% to 10%.

The weight-average molecular weight and number-average molecular weight of the ultraviolet-curable acrylic polymer are values measured in the following manner.

The weight-average molecular weight and number-average molecular weight of the ultraviolet-curable acrylic polymer are polystyrene-equivalent values determined by GPC (gel permeation chromatography). Specifically, the ultraviolet-curable acrylic polymer is sampled, mixed with THF (tetrahydrofuran) to dilute 300-fold the ultraviolet-curable acrylic polymer, and subjected to filtering (trade name: Millex-LH <0.45 $\mu$m>, manufactured by Nihon Millipore K.K.), to prepare a measurement sample.

This measurement sample is subjected to GPC to thereby measure the weight-average molecular weight and number-average molecular weight of the ultraviolet-curable acrylic polymer.

For example, the weight-average molecular weight and number-average molecular weight of the ultraviolet-curable acrylic polymer can be measured with the following measurement apparatus under the following measurement conditions.

Measurement apparatus: trade name "e2695", manufactured by Waters Corporation

Measurement conditions: Columns: Two columns of Shodex GPC KF-806L connected in series

Mobile phase: tetrahydrofuran, 1.0 mL/min
Detector: RI detector (e2414)
Standard substance: polystyrene
SEC temperature: 40°C

In the ultraviolet-curable acrylic polymer, the change ratio of standard-polystyrene-equivalent weight-average molecular weight after heating at 150°C for 6 hours is a value measured in the following manner.

The weight-average molecular weight of the ultraviolet-curable acrylic polymer to be heated is first measured in the above-described manner, and the resultant value is defined as an initial weight-average molecular weight. Subsequently, the ultraviolet-curable acrylic polymer is heated at 150°C for 6 hours. Subsequently, the weight-average molecular weight of the ultraviolet-curable acrylic polymer is measured in the above-described manner, and the resultant value is defined as a post-heating weight-average molecular weight. The following formula is used to calculate the change ratio of the standard-polystyrene-equivalent weight-average molecular weight of the ultraviolet-curable acrylic polymer after heating at 150°C for 6 hours.

```
Change ratio (%) of weight-average molecular weight

= 100 × (post-heating weight-average molecular weight -

initial weight-average molecular weight)/initial weight-

average molecular weight
```

The ultraviolet-curable acrylic polymer has a post-ultraviolet-curing tensile-shear strain tanθ of 2.0 to 6.5, preferably 2.5 to 6, more preferably 2.5 to 6.48, particularly preferably 4 to 6.45, more preferably 4 to 5.5. When the tensile-shear strain tanθ is within such a range, the polymer exhibits excellent affixation properties irrespective of the surface roughness of an adherend, and exhibits high cohesive strength as an adhesive to thereby reduce adhesive splitting.

Incidentally, the post-ultraviolet-curing tensile-shear strain tanθ of the ultraviolet-curable acrylic polymer is a value measured in the following manner.

An ultraviolet-curable acrylic polymer to be cured with ultraviolet radiation is applied onto a polyethylene terephthalate (PET) film so as to have a thickness of 20 $\mu$m. Subsequently, an ultraviolet irradiation apparatus is used to irradiate the ultraviolet-curable acrylic polymer with ultraviolet radiation (UV-C) at a UV-C irradiation intensity of about 48 mW/cm$^2$ and an accumulated exposure of about 60 mJ/cm$^2$, to thereby cure the ultraviolet-curable acrylic polymer. A test film is produced such that the adhesive layer having a thickness of 20 $\mu$m is formed on and integrated with the polyethylene terephthalate film. From the test film, a flat rectangular test piece having a width of 10 mm and a length of 100 mm is cut out. A 10-mm portion of one lengthwise end of the test piece is affixed to an SUS base in an atmosphere at 23°C. The SUS base is placed such that the affixed surface of the test piece is oriented vertically. A weight of 200 g is attached to the other lengthwise end of the test piece and the test piece is maintained for 3 minutes. Subsequently, the displacement (primary displacement) of the one lengthwise end of the test piece is measured. The following formula is used to calculate tensile-shear strain tanθ.

```
Tensile-shear strain tanθ

= Primary displacement (μm)/Thickness of adhesive layer

(μm)
```

Incidentally, the ultraviolet irradiation apparatus may be, for example, an apparatus commercially available from Heraeus (originally, Fusion UV Systems Inc.) under the trade name of "Light Hammer 6" (employing H bulb).

The ultraviolet-curable acrylic polymer is not particularly limited as long as it is an acrylic polymer in which the above-described change ratio of weight-average molecular weight is -20% to 20%, the post-ultraviolet-curing tensile-shear strain tanθ is 2.0 to 6.5, and irradiation with ultraviolet radiation causes a cross-linking reaction between molecules to achieve curing. However, preferred are the following acrylic polymers.

Specifically, preferred is an ultraviolet-curable acrylic polymer including 89.65 to 99.75 mass% of a (meth)acrylate unit not intramolecularly having an ultraviolet reactive group or a carboxy group, and 0.15 to 0.35 mass% of a monomer unit intramolecularly having an ultraviolet reactive group, wherein the polymer contains 70 mass% or more of a (meth)acrylate unit serving as a main unit of the (meth)acrylate unit not intramolecularly having an ultraviolet reactive group or a carboxy group, includes, at an end, a residue of a thiol compound serving as a chain transfer agent, and has a post-ultraviolet-curing gel fraction of 55 to 70 mass%.

More preferred is an ultraviolet-curable acrylic polymer including 89.65 to 99.75 mass% of a (meth)acrylate unit not intramolecularly having an ultraviolet reactive group or a carboxy group, 0.15 to 0.35 mass% of a monomer unit intramolecularly having an ultraviolet reactive group, and 0.1 to 10 mass% of a monomer unit having a carboxy group and a radical-polymerizable unsaturated double bond, wherein the polymer contains 70 mass% or more of a (meth)acrylate unit serving as a main unit of the (meth)acrylate unit not intramolecularly having an ultraviolet reactive group or a carboxy group, includes, at an end, a residue of a thiol compound serving as a chain transfer agent, and has a post-ultraviolet-curing gel fraction of 55 to 70 mass%.

Incidentally, (meth)acrylic acid means acrylic acid or methacrylic acid; (meth)acrylate means acrylate or methacrylate.

Preferred is an ultraviolet-curable acrylic polymer that is a polymer of a monomer composition including 89.65 to 99.75 mass% of a (meth)acrylate not intramolecularly having an ultraviolet reactive group or a carboxy group, and 0.15 to 0.35 mass% of a monomer intramolecularly having an ultraviolet reactive group, wherein the polymer contains 70 mass% or more of a (meth)acrylate serving as a main (meth)acrylate of the (meth)acrylate not intramolecularly having an ultraviolet reactive group or a carboxy group, includes, at an end, a residue of a thiol compound serving as a chain transfer agent, and has a post-ultraviolet-curing gel fraction of 55 to 70 mass%.

More preferred is an ultraviolet-curable acrylic polymer that is a polymer of a monomer composition including 89.65 to 99.75 mass% of a (meth)acrylate not intramolecularly having an ultraviolet reactive group or a carboxy group, 0.15 to 0.35 mass% of a monomer intramolecularly having an ultraviolet reactive group, and 0.1 to 10 mass% of a monomer having a carboxy group and a radical-polymerizable unsaturated double bond, wherein the polymer contains 70 mass% or more of a (meth)acrylate serving as a main (meth)acrylate of the (meth)acrylate not intramolecularly having an ultraviolet reactive group or a carboxy group, includes, at an end, a residue of a thiol compound serving as a chain transfer agent, and has a post-ultraviolet-curing gel fraction of 55 to 70 mass%.

The ultraviolet-curable acrylic polymer preferably includes a (meth)acrylate unit not intramolecularly having an ultraviolet reactive group or a carboxy group (-COOH), and a monomer unit intramolecularly having an ultraviolet reactive group, wherein these monomer units each do not intramolecularly have an aromatic ring absorbing light in the ultraviolet region.

The ultraviolet-curable acrylic polymer preferably includes a (meth)acrylate unit not intramolecularly having an ultraviolet reactive group or a carboxy group, a monomer unit intramolecularly having an ultraviolet reactive group, and a monomer including a carboxy group and a radical-polymerizable unsaturated double bond. Preferably, these monomer units each do not intramolecularly have an aromatic ring absorbing light in the ultraviolet region.

The (meth)acrylate not intramolecularly having an ultraviolet reactive group or a carboxy group is not particularly limited, and examples include alkyl (meth)acrylates such as methyl (meth)acrylate, ethyl (meth)acrylate, n-propyl (meth)acrylate, n-butyl (meth)acrylate, isobutyl (meth)acrylate, sec-butyl (meth)acrylate, n-hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, and lauryl (meth) methacrylate; an alkyl (meth)acrylate in which the alkyl group has 1 to 8 carbons is preferably included. The alkyl (meth)acrylate in which the alkyl group has 1 to 8 carbons is preferably 2-ethylhexyl (meth)acrylate or butyl (meth)acrylate, more preferably butyl acrylate. Such (meth)acrylates not intramolecularly having an ultraviolet reactive group or a carboxy group may be used alone or in combination of two or more thereof.

The ultraviolet reactive group is a functional group that is excited by irradiation with ultraviolet radiation to generate a radical, the radical causing a hydrogen abstraction reaction to thereby form a cross-linked structure between ultraviolet-curable acrylic polymer molecules.

Examples of the ultraviolet reactive group include a benzophenone group, a benzoin group, a maleimide group, and derivatives of the foregoing.

In the ultraviolet-curable acrylic polymer, the content of the (meth)acrylate unit not intramolecularly having an ultraviolet reactive group or a carboxy group is preferably 89.65 to 99.75 mass%, more preferably 91.5 to 97 mass%, particularly preferably 92.5 to 95 mass%. When the content of the (meth)acrylate unit not intramolecularly having an ultraviolet reactive group or a carboxy group is 89.65 mass% or more, the ultraviolet-curable acrylic polymer in a molten state has an appropriate viscosity, and the ultraviolet-curable acrylic polymer has enhanced coatability, which is preferred. When the content of the (meth)acrylate unit not intramolecularly having an ultraviolet reactive group or a carboxy group is 99.75 mass% or less, the ultraviolet-curable acrylic polymer having been cured by irradiation with ultraviolet radiation exhibits desired adhesive properties, which is preferred.

The monomer intramolecularly having an ultraviolet reactive group is not particularly limited as long as it is polymerizable with the (meth)acrylate not intramolecularly having an ultraviolet reactive group or a carboxy group. Incidentally, the ultraviolet reactive group is the same as that described above and is not described here.

The monomer intramolecularly having an ultraviolet reactive group is preferably co-polymerizable with the (meth)acrylate not intramolecularly having an ultraviolet reactive group or a carboxy group, and the monomer having a carboxy group and a radical-polymerizable unsaturated double bond.

The ultraviolet reactive group of the monomer intramolecularly having an ultraviolet reactive group is not particularly limited, and examples include a benzophenone group, a benzoin group, a maleimide group, and derivatives of the foregoing. Preferred are a benzophenone group and derivatives thereof. Among such ultraviolet reactive groups, a single species or two or more species may be included in a molecule.

The monomer intramolecularly having an ultraviolet reactive group is preferably an acrylic monomer intramolecularly having an ultraviolet reactive group, more preferably a (meth)acrylate intramolecularly having an ultraviolet reactive group, particularly preferably a (meth)acrylate intramolecularly having a benzophenone group, most preferably 4-acryloyloxybenzophenone. Incidentally, among such monomers intramolecularly having an ultraviolet reactive group, a single species may be used or two or more species may be used in combination.

The acrylic monomer intramolecularly having an ultraviolet reactive group is not particularly limited; examples include 4-acryloyloxybenzophenone, 4-acryloyloxyethoxybenzophenone, 4-acryloyloxy-4'-methoxybenzophenone, 4-acryloyloxyethoxy-4'-methoxybenzophenone, 4-acryloyloxy-4'-bromobenzophenone, 4-acryloyloxyethoxy-4'-bromobenzophenone, 4-methacryloyloxybenzophenone, 4-methacryloyloxyethoxybenzophenone, 4-methacryloyloxy-4'-methoxybenzophenone, 4-methacryloyloxyethoxy-4'-methoxybenzophenone, 4-methacryloyloxy-4'-bromobenzophenone, and 4-methacryloyloxyethoxy-4'-bromobenzophenone, preferably 4-acryloyloxybenzophenone. Incidentally, among such acrylic monomers intramolecularly having an ultraviolet reactive group, a single species may be used or two or more species may be used in combination.

In the ultraviolet-curable acrylic polymer, the content of the monomer unit intramolecularly having an ultraviolet reactive group is preferably 0.15 to 0.35 mass%, more preferably 0.17 to 0.3 mass%, particularly preferably 0.2 to 0.25 mass%. When the content of the monomer unit intramolecularly having an ultraviolet reactive group is 0.15 to 0.35 mass%, the ultraviolet-curable acrylic polymer cured by irradiation with ultraviolet radiation exhibits desired adhesive properties.

The ultraviolet-curable acrylic polymer preferably contains a monomer unit having a carboxy group and a radical-polymerizable unsaturated double bond.

The monomer having a carboxy group and a radical-polymerizable unsaturated double bond is not particularly limited as long as it is co-polymerizable with the (meth)acrylate not intramolecularly having an ultraviolet reactive group or a carboxy group, and the monomer intramolecularly having an ultraviolet reactive group.

Examples of the monomer having a carboxy group and a radical-polymerizable unsaturated double bond include monocarboxylic acids such as acrylic acid, methacrylic acid, and β-carboxyethyl acrylate, and dicarboxylic acids such as fumaric acid and maleic acid. The monomer having a carboxy group and a radical-polymerizable unsaturated double bond is preferably acrylic acid, methacrylic acid, or β-carboxyethyl acrylate, more preferably acrylic acid or β-carboxyethyl acrylate, particularly preferably acrylic acid because adhesive splitting can be further reduced. Incidentally, among such monomers having a carboxy group and a radical-polymerizable unsaturated double bond, a single species may be used or two or more species may be used in combination.

In the ultraviolet-curable acrylic polymer, the content of the monomer unit having a carboxy group and a radical-polymerizable unsaturated double bond is preferably 0.1 to 10 mass%, more preferably 3 to 9 mass%. When the content of the monomer unit having a carboxy group and a radical-polymerizable unsaturated double bond is 0.1 to 10 mass%, the ultraviolet-curable acrylic polymer exhibits excellent thermal stability in a molten state, has an appropriate viscosity in a molten state, and has excellent coatability. In addition, the ultraviolet-curable acrylic polymer having been cured by irradiation with ultraviolet radiation exhibits desired adhesive properties and exhibits high adhesiveness.

The content of the (meth)acrylate unit serving as the main unit of the (meth)acrylate unit not intramolecularly having an ultraviolet reactive group or a carboxy group in the ultraviolet-curable acrylic polymer is preferably 70 mass% or more, more preferably 80 mass% or more, particularly preferably 90 mass% or more. The content of the (meth)acrylate unit serving as the main unit of the (meth)acrylate unit not intramolecularly having an ultraviolet reactive group or a carboxy group in the ultraviolet-curable acrylic polymer is preferably 99.65 mass% or less. When the content of the (meth)acrylate unit serving as the main unit of the (meth)acrylate unit not intramolecularly having an ultraviolet reactive group or a carboxy group is 70 mass% or more, the ultraviolet-curable acrylic polymer has excellent thermal stability, has an appropriate viscosity in a molten state and has excellent coatability. When the content of the (meth)acrylate unit serving as the main unit of the (meth)acrylate unit not intramolecularly having an ultraviolet reactive group or a carboxy group is 70 mass% or more, the ultraviolet-curable acrylic polymer having been cured by irradiation with ultraviolet radiation exhibits desired adhesive properties. When the content of the (meth)acrylate unit serving as the main unit of the (meth)acrylate unit not intramolecularly having an ultraviolet reactive group or a carboxy group is 99.65 mass% or less, the ultraviolet-curable acrylic polymer having been cured by irradiation with ultraviolet radiation exhibits desired adhesive properties. Incidentally, the (meth)acrylate unit serving as the main unit is, among (meth)acrylate units not intramolecularly having an ultraviolet reactive group or a carboxy group, a (meth)acrylate unit of the highest content. Incidentally, when there are a plurality of (meth)acrylate unit species of the highest content, all these (meth)acrylates are (meth)acrylate units serving as the main units.

The ultraviolet-curable acrylic polymer has, at a molecular end, the residue of a thiol compound serving as a chain transfer agent. The chain transfer agent is a thiol compound not intramolecularly having a tertiary carbon, an alkoxy group, a hydroxy group (-OH), a keto group, or a structure in which a thiol group is directly bonded to a secondary carbon. When such a thiol compound is used as a chain transfer agent in polymerization, the resultant ultraviolet-curable acrylic polymer has excellent thermal stability in a molten state. Incidentally, the tertiary carbon is a carbon to which three carbons are directly bonded via covalent bonds. The secondary carbon is a carbon to which two carbons are directly bonded via covalent bonds. Examples of the alkoxy group include a methoxy group, an ethoxy group, and a butoxy group.

The thiol compound not intramolecularly having a tertiary carbon, an alkoxy group, a hydroxy group (-OH), a keto group, or a structure in which a thiol group is directly bonded to a secondary carbon is not particularly limited. The thiol compound not intramolecularly having a tertiary carbon, an alkoxy group, a hydroxy group (-OH), a keto group, or a structure in which a thiol group is directly bonded to a secondary carbon may be a monofunctional thiol compound intramolecularly having a single thiol group (-SH), or a multifunctional thiol compound intramolecularly having a plurality of thiol groups (-SH). The monofunctional thiol compound intramolecularly having a single thiol group (-SH) may be simply referred to as "monofunctional thiol compound". The multifunctional thiol compound intramolecularly having a plurality of thiol groups (-SH) may be simply referred to as "multifunctional thiol compound". The thiol compound not intramolecularly having a tertiary carbon, an alkoxy group, a hydroxy group (-OH), a keto group, or a structure in which a thiol group is directly bonded to a secondary carbon is preferably a monofunctional thiol compound intramolecularly having a single thiol group (-SH) because adhesive splitting can be reduced.

The monofunctional thiol compound is preferably a thiol compound represented by $R^1$-SH. $R^1$ is an alkyl group not including a tertiary carbon, or a monovalent atomic group in which an alkyl group not including a tertiary carbon has, in a portion, an ester bond. $R^1$ is preferably a linear alkyl group not including a tertiary carbon, or a monovalent atomic group in which a linear alkyl group not including a tertiary carbon has, in a portion, an ester bond. $R^1$ preferably has 4 to 18, more preferably 8 to 18, particularly preferably 11 to 18 carbons.

Examples of the alkyl group not including a tertiary carbon include a methyl group, an ethyl group, an n-propyl group, an n-butyl group, an n-pentyl group, an n-hexyl group, an n-heptyl group, an n-heptyl group, an n-octyl group, an n-octyl group, an n-nonyl group, an n-decyl group, an n-undecyl group, a lauryl group (n-dodecyl group), an n-tridecyl group, an n-pentadecyl group, an n-hexadecyl group, an n-heptadecyl group, and an n-octadecyl group, preferably a lauryl group.

The monovalent atomic group containing an ester bond in a portion of an alkyl group not including a tertiary carbon is, for example, an atomic group represented by $-R^2COOR^3$. Incidentally, $R^2$ is an alkylene group not including a tertiary carbon. $R^2$ is preferably a linear alkylene group not including a tertiary carbon. $R^3$ is an alkyl group not including a tertiary carbon. $R^3$ is preferably a linear alkyl group not including a tertiary carbon.

Examples of $R^2$ include a methylene group, an ethylene group, an n-butylene group, and an n-pentylene group (isopentylene group), preferably an ethylene group ($-CH_2CH_2-$). $R^2$ preferably has 1 to 5, more preferably 2 to 3 carbons.

Examples of $R^3$ include a methyl group, an ethyl group, an n-propyl group, an n-butyl group, an n-pentyl group, an n-hexyl group, an n-heptyl group, an n-heptyl group, an n-octyl group, an n-octyl group, an n-nonyl group, an n-decyl group, an n-undecyl group, a lauryl group (n-dodecyl group), an n-tridecyl group, an sn-pentadecyl group, an n-hexadecyl group, an n-heptadecyl group, and an n-octadecyl group (stearyl group), preferably an n-octadecyl group (stearyl group). $R^3$ preferably has 4 to 18, more preferably 11 to 18 carbons.

Preferred examples of the monofunctional thiol compound include lauryl mercaptan, and stearyl-3-mercaptopropionate.

The multifunctional thiol compound, which intramolecularly has a plurality of thiol groups, preferably intramolecularly has a plurality of structural formulas represented by -OCOR$^4$-SH. R$^4$ is an alkylene group not including a tertiary carbon. R$^4$ is preferably a linear alkylene group not including a tertiary carbon. Examples of R$^4$ include a methylene group, an ethylene group, an n-propylene group, an n-butylene group, and an n-pentylene group, preferably an ethylene group (-CH$_2$CH$_2$-). R$^4$ preferably has 1 to 5, more preferably 2 to 3 carbons.

Preferred examples of the multifunctional thiol compound include trimethylolpropane tris(3-mercaptopropionate), trimethylolpropane tris(3-mercaptopropionate), tris(3-mercaptopropionyloxy)ethyl isocyanurate, pentaerythritol tetrakis(3-mercaptopropionate), and dipentaerythritol hexakis(3-mercaptopropionate).

The cured product obtained by irradiating the ultraviolet-curable acrylic polymer with ultraviolet radiation preferably has a gel fraction of 55 mass% or more, more preferably 58 mass% or more, more preferably 59 mass% or more, particularly preferably 60 mass% or more, most preferably 61 mass% or more. The cured product obtained by irradiating the ultraviolet-curable acrylic polymer with ultraviolet radiation preferably has a gel fraction of 70 mass% or less, more preferably 69 mass% or less, more preferably 68 mass% or less, particularly preferably 67 mass% or less, most preferably 66 mass% or less. When the ultraviolet-curable acrylic polymer having been cured with ultraviolet radiation has a gel fraction of 55 mass% or more, it provides an appropriate cohesive strength as an ultraviolet-curable hot-melt adhesive. When the ultraviolet-curable acrylic polymer having been cured with ultraviolet radiation has a gel fraction of 70 mass% or less, it exhibits excellent adhesive properties irrespective of the surface roughness of an adherend.

The gel fraction of the cured product obtained by irradiating the ultraviolet-curable acrylic polymer with ultraviolet radiation is a value measured in the following manner.

The ultraviolet-curable acrylic polymer is applied onto a releasably-treated polyethylene terephthalate (PET) film so as to have a thickness of 20 $\mu$m.

Subsequently, an ultraviolet irradiation apparatus is used to irradiate the ultraviolet-curable acrylic polymer with ultraviolet radiation (UV-C) at a UV-C irradiation intensity of about 48 mW/cm$^2$ and at an accumulated exposure of about 60 mJ/cm$^2$, to cure the ultraviolet-curable acrylic polymer. This provides a test film including an adhesive layer having a thickness of 20 $\mu$m and disposed on and integrated with the releasably-treated polyethylene terephthalate film.

About 0.2 g (A g) of the adhesive layer is peeled from the releasably-treated polyethylene terephthalate film, and placed into a glass vial. To the glass vial, about 30 mL of tetrahydrofuran is added, to cause the sampled adhesive layer to swell sufficiently. The swelling adhesive layer, together with tetrahydrofuran, is placed onto a 200-mesh metal screen to obtain gel content. The obtained gel is placed into an oven set at 80°C for 2 hours, to sufficiently remove tetrahydrofuran. The mass (B g) of the dried gel is measured. The following formula is used to calculate the gel fraction of the ultraviolet-curable acrylic polymer having been cured with ultraviolet radiation.

$$\texttt{Gel fraction (mass\%) = 100} \times \texttt{B/A}$$

Incidentally, the ultraviolet irradiation apparatus is, for example, an apparatus commercially available from Heraeus (originally, Fusion UV Systems Inc.) under the trade name of "Light Hammer 6" (employing H bulb).

The ultraviolet-curable acrylic polymer preferably has a weight-average molecular weight of 50000 to 500000, more preferably 150000 to 250000. When the ultraviolet-curable acrylic polymer has a weight-average molecular weight within such a range, the ultraviolet-curable acrylic polymer has an appropriate viscosity in a molten state and has excellent coatability.

The ultraviolet-curable acrylic polymer preferably has a molecular-weight distribution (weight-average molecular weight/number-average molecular weight) of 6.1 or less, more preferably 6.0 or less, more preferably 5.5 or less, more preferably 5.4 or less, more preferably 5.3 or less, more preferably 5.2 or less, more preferably 5.1 or less, particularly preferably 5.0 or less. When the ultraviolet-curable acrylic polymer has a molecular-weight distribution of 6.1 or less, the ultraviolet-curable acrylic polymer has a low content of low-molecular-weight components, so that the ultraviolet-curable acrylic polymer having been cured by irradiation with ultraviolet radiation has a low content of low-molecular-weight components. Thus, the ultraviolet-curable acrylic polymer having been cured by irradiation with ultraviolet radiation has excellent cohesive strength, and, when used as an adhesive, enables a reduction in adhesive splitting. The ultraviolet-curable acrylic polymer preferably has a molecular-weight distribution (weight-average molecular weight/number-average molecular weight) of 4.1 or more, more preferably 4.2 or more, more preferably 4.3 or more, more preferably 4.4 or more, particularly preferably 4.5 or more. When the ultraviolet-curable acrylic polymer has a molecular-weight distribution (weight-average molecular weight/number-average molecular weight) of 4.1 or more, the ultraviolet-curable acrylic polymer comprises an appropriate amount of low-molecular-weight components and has an appropriate viscosity. Therefore, the ultraviolet-curable acrylic polymer exhibits excellent wettability on a surface of an adherend and thus excellent adhesive properties irrespective of surface roughness of the adherend.

To the ultraviolet-curable acrylic polymer, as long as its properties are not degraded, other additives may be added, such as a tackifier, an ultraviolet polymerization initiator, a plasticizer, an antioxidant, a coloring agent, a flame retarder, and an antistatic agent.

A method for producing an ultraviolet-curable acrylic polymer according to the present invention will be described. The ultraviolet-curable acrylic polymer can be produced by causing radical polymerization of a monomer composition including the (meth)acrylate not intramolecularly having an ultraviolet reactive group or a carboxy group and the monomer intramolecularly having an ultraviolet reactive group, in the presence of the thiol compound serving as a chain transfer agent and a polymerization initiator, in a solvent. The monomer composition preferably contains a monomer having a carboxy group and a radical-polymerizable unsaturated double bond in order that the resultant ultraviolet-curable acrylic polymer cured by irradiation with ultraviolet radiation exhibits high adhesiveness. Incidentally, the radical polymerization of the monomer composition may be performed by a commonly used polymerization method. The polymerization initiator may be a publicly known polymerization initiator used for radical polymerization.

Incidentally, the solvent used in radical polymerization is not particularly limited as long as it is a solvent having been conventionally used for radical polymerization; examples include ester solvents such as ethyl acetate, propyl acetate, and butyl acetate, preferably ethyl acetate.

In the monomer composition, the content of the (meth)acrylate not intramolecularly having an ultraviolet reactive group or a carboxy group is preferably 89.65 to 99.75 mass%, more preferably 91.5 to 97 mass%, particularly preferably 92.5 to 95 mass%. When the content of the (meth)acrylate not intramolecularly having an ultraviolet reactive group or a carboxy group is 89.65 mass% or more, the resultant ultraviolet-curable acrylic polymer has an appropriate viscosity in a molten state, and the ultraviolet-curable acrylic polymer has enhanced coatability, which is preferred. When the content of the (meth)acrylate not intramolecularly having an ultraviolet reactive group or a carboxy group is 99.75 mass% or less, the ultraviolet-curable acrylic polymer having been cured by irradiation with ultraviolet radiation exhibits desired adhesive properties, which is preferred.

In the monomer composition, the content of the monomer intramolecularly having an ultraviolet reactive group is preferably 0.15 to 0.35 mass%, more preferably 0.17 to 0.3 mass%, particularly preferably 0.2 to 0.25 mass%. When the content of the monomer intramolecularly having an ultraviolet reactive group is 0.15 to 0.35 mass%, the resultant ultraviolet-curable acrylic polymer cured by irradiation with ultraviolet radiation exhibits desired adhesive properties.

In the monomer composition, the content of the monomer having a carboxy group and a radical-polymerizable unsaturated double bond is preferably 0.1 to 10 mass%, more preferably 3 to 9 mass%. When the content of the monomer having a carboxy group and a radical-polymerizable unsaturated double bond is 0.1 to 10 mass%, the resultant ultraviolet-curable acrylic polymer has excellent thermal stability in a molten state, has an appropriate viscosity in a molten state, and has excellent coatability. In addition, the ultraviolet-curable acrylic polymer having been cured by irradiation with ultraviolet radiation exhibits desired adhesive properties, and exhibits high adhesiveness.

The content of a (meth)acrylate serving as the main (meth)acrylate of (meth)acrylates not intramolecularly having an ultraviolet reactive group or a carboxy group is preferably, in the monomer composition, 70 mass% or more, more preferably 80 mass% or more, particularly preferably 90 mass% or more. The content of a (meth)acrylate serving as the main (meth)acrylate of (meth)acrylates not intramolecularly having an ultraviolet reactive group or a carboxy group is preferably, in the monomer composition, 99.65 mass% or less. When the content of a (meth)acrylate serving as the main (meth)acrylate of (meth)acrylates not intramolecularly having an ultraviolet reactive group or a carboxy group is 70 mass% or more, the resultant ultraviolet-curable acrylic polymer has excellent thermal stability, has an appropriate viscosity in molten state, and has excellent coatability. In addition, the ultraviolet-curable acrylic polymer having been cured by irradiation with ultraviolet radiation exhibits desired adhesive properties. When the content of a (meth)acrylate serving as the main (meth)acrylate of (meth)acrylates not intramolecularly having an ultraviolet reactive group or a carboxy group is 99.65 mass% or less, the ultraviolet-curable acrylic polymer having been cured by irradiation with ultraviolet radiation exhibits desired adhesive properties. Incidentally, the (meth)acrylate serving as the main (meth)acrylate is a (meth)acrylate of the highest content in the (meth)acrylates not intramolecularly having an ultraviolet reactive group or a carboxy group. Incidentally, when there are a plurality of (meth)acrylates of the highest content, all these (meth)acrylates are the main (meth)acrylates.

The amount of thiol compound used as a chain transfer agent relative to 100 parts by mass of the monomer composition is preferably 0.01 to 5 parts by mass, more preferably 0.05 to 1 part by mass. When the amount of thiol compound used is within such a range, the resultant ultraviolet-curable acrylic polymer has an appropriate viscosity in a molten state and has excellent coatability.

The ultraviolet-curable acrylic polymer has, in its main chain, an ultraviolet reactive group. When the ultraviolet-curable acrylic polymer is irradiated with ultraviolet radiation, a radical is generated in the ultraviolet reactive group and a cross-linking reaction occurs intermolecularly in the ultraviolet-curable acrylic polymer; a cross-linked structure is formed intermolecularly in the ultraviolet-curable acrylic polymer, so that curing is achieved and desired adhesive properties are exhibited. The ultraviolet-curable acrylic polymer can be suitably used as an ultraviolet-curable hot-melt adhesive.

As described above, the ultraviolet-curable acrylic polymer is cured by irradiation with ultraviolet radiation to exhibit adhesive properties as designed. Thus, an ultraviolet-curable hot-melt adhesive containing the ultraviolet-curable acrylic polymer can be easily designed so as to exhibit desired adhesive properties that differ between applications. When the ultraviolet-curable hot-melt adhesive is designed such that the post-curing adhesiveness is low, it is suitably usable for, for example, an application of releasable affixation to an adherend without causing adhesive splitting (for example, sticky notes). On the other hand, when the ultraviolet-curable hot-melt adhesive is designed such that the post-curing adhesiveness is high, it is also suitably usable for applications for adhesive tapes, consumer product labels, and electronic devices (such as personal computers, smartphones, televisions, and digital cameras).

The ultraviolet-curable acrylic polymer exhibits excellent adhesive properties irrespective of the material and surface roughness of an adherend. Thus, the ultraviolet-curable acrylic polymer exhibits excellent adhesive properties for containers formed of a wide variety of materials, having various types of decoration on the surfaces, and having various surface roughnesses, and is suitably usable as a moisture-curable hot-melt adhesive constituting consumer product labels.

EXAMPLES

Hereinafter, the present invention will be more specifically described with reference to Examples; however, the present invention is not limited to the Examples.

(Examples 1 to 11, Comparative examples 1 to 10)

A 2-L separable flask equipped with a stirrer, a condenser, a thermometer, and a nitrogen gas inlet was prepared. The separable flask was charged with a reaction liquid containing, as described in Tables 1 to 4, predetermined amounts of butyl acrylate (BA), 2-ethylhexyl acrylate (2EHA), acrylic acid (AAc), β-carboxyethyl acrylate (βCEA), 4-acryloyloxy-benzophenone (BPA), and ethyl acetate, and, as described in Tables 1 to 4, a predetermined amount of a chain transfer agent. The reaction liquid within the separable flask was stirred at a rotation rate of 100 rpm. Incidentally, in Tables 1 to 4, the "monomer intramolecularly having an ultraviolet reactive group" is described as "Ultraviolet reactive group-containing monomer". Incidentally, in Examples 1 and 3 to 11 and Comparative examples 5, 6, and 9, 100 parts by mass of ethyl acetate was supplied to the separable flask. In Example 2 and Comparative examples 1 to 4 and 10, 25 parts by mass of ethyl acetate was supplied to the separable flask. In Comparative example 7, 12.73 parts by mass of ethyl acetate was supplied to the separable flask. In Comparative example 8, ethyl acetate was not supplied to the separable flask.

After the separable flask was purged with nitrogen gas, the reaction liquid was refluxed with a water bath. Subsequently, to the separable flask, t-hexylperoxy-2-ethyl hexanoate and t-hexylperoxy pivalate were added in amounts (parts by mass) described in, in Table 5, the "PERHEXYL O" and "PERHEXYL PV" cells for "Start of radical polymerization", to start radical polymerization. Incidentally, t-hexylperoxy-2-ethyl hexanoate used is commercially available from NOF CORPORATION under the trade name of "PERHEXYL O"; and t-hexylperoxy pivalate used is commercially available from NOF CORPORATION under the trade name of "PERHEXYL PV".

From the start of the radical polymerization, as described in Table 5, after the lapses of predetermined times, predetermined amounts (parts by mass) of t-hexylperoxy-2-ethyl hexanoate (manufactured by NOF CORPORATION, trade name "PERHEXYL O") and t-hexylperoxy pivalate (manufactured by NOF CORPORATION, trade name "PERHEXYL PV") were added to the reaction liquid to perform the radical polymerization for 6 hours to the completion of the reaction. The reaction liquid was left to stand at ordinary pressure at 130°C for 2 hours, and subsequently the solvent was removed at a reduced pressure at 110°C for 2 hours, to obtain an ultraviolet-curable acrylic polymer. The monomers were entirely consumed for radical polymerization.

Incidentally, lauryl mercaptan (LM) and stearyl-3-mercaptopropionate (STMP) are each a monofunctional thiol compound that does not have, in its molecular structure, a tertiary carbon, an alkoxy group, a hydroxy group, a keto group, or a structure in which a thiol group is directly bonded to a secondary carbon.

Trimethylolpropane tris(3-mercaptopropionate) (TMMP) is a multifunctional thiol compound that does not have, in its molecular structure, a tertiary carbon, an alkoxy group, a hydroxy group, a keto group, or a structure in which a thiol group is directly bonded to a secondary carbon.

Tris(3-mercaptopropionyloxy)ethyl isocyanurate (TEMPIC) is a multifunctional thiol compound that does not have, in its molecular structure, a tertiary carbon, an alkoxy group, a hydroxy group, a keto group, or a structure in which a thiol group is directly bonded to a secondary carbon.

Pentaerythritol tetrakis(3-mercaptopropionate) (PEMP) is a multifunctional thiol compound that does not have, in its molecular structure, a tertiary carbon, an alkoxy group, a hydroxy group, a keto group, or a structure in which a thiol group is directly bonded to a secondary carbon.

Dipentaerythritol hexakis(3-mercaptopropionate) (DPMP) is a multifunctional thiol compound that does not have, in its molecular structure, a tertiary carbon, an alkoxy group, a hydroxy group, a keto group, or a structure in which a thiol group is directly bonded to a secondary carbon.

2-Ethylhexyl-3-mercaptopropionate (EHMP) is a monofunctional thiol compound that includes a tertiary carbon. 3-Methoxybutyl-3-mercaptopropionate (MBMP) is a monofunctional thiol compound that has an alkoxy group.

[Heating conditions for ultraviolet-curable acrylic polymers]

The obtained ultraviolet-curable acrylic polymers were sampled, placed into an oven set at 150°C, and heated for 6 hours. Subsequently, the polymers were taken out of the oven to provide ultraviolet-curable acrylic polymers after the heating.

The obtained ultraviolet-curable acrylic polymers were measured in the above-described manner in terms of molecular-weight distribution, change ratio of standard-polystyrene-equivalent weight-average molecular weight after heating at 150°C for 6 hours, post-ultraviolet-curing tensile-shear strain tanθ, and post-ultraviolet-curing gel fraction. The results are described in Tables 1 to 4.

Incidentally, in Tables 1 to 4, the "change ratio of standard-polystyrene-equivalent weight-average molecular weight after heating at 150°C for 6 hours" is described as "Change ratio of weight-average molecular weight"; the "post-ultraviolet-curing tensile-shear strain tanθ" is described as "Tensile-shear strain tanθ"; and the post-ultraviolet-curing gel fraction is described as "Gel fraction".

The obtained ultraviolet-curable acrylic polymers were measured in the following manner in terms of strength for peeling from SUS (surface roughness), change ratio of strength for peeling from SUS (surface roughness), strength for peeling from SUS (heating), change ratio of strength for peeling from SUS (heating), adhesive splitting on SUS, and melt viscosity. The results are described in Tables 1 to 4.

[Strength for peeling from SUS (surface roughness)]

The ultraviolet-curable acrylic polymer was applied onto a polyethylene terephthalate (PET) film so as to have a thickness of 20 μm. Subsequently, an ultraviolet irradiation apparatus (manufactured by Heraeus (originally, Fusion UV Systems Inc.), trade name "Light Hammer 6" (employing H bulb)) was used to irradiate the ultraviolet-curable acrylic polymer with ultraviolet radiation (UV-C) at a UV-C irradiation intensity of about 48 mW/cm$^2$ and an accumulated exposure of about 60 mJ/cm$^2$. Thus, the ultraviolet-curable acrylic polymer was cured to produce a test film including an adhesive layer having a thickness of 20 μm and disposed on and integrated with the polyethylene terephthalate film. The test film was cut into a width of 25 mm to produce a test piece.

An SUS plate was prepared. A surface of this SUS plate was polished with #40 waterproof sandpaper to provide a roughened surface. The roughened surface of the SUS plate was wiped with a hexane-acetone solvent mixture to achieve degreasing. The test piece was affixed to, with its adhesive layer, the roughened surface of the SUS plate, and a 2-kg hand roller was then reciprocated over the test piece. The test piece was aged for 20 minutes, and subsequently peeled with an Autograph AGS-100NX manufactured by SHIMADZU CORPORATION at an angle of 180° at a rate of 300 mm/min to measure peel strength Xa (N/25 mm).

Another SUS plate was prepared. A surface of this SUS plate was polished with #240 waterproof sandpaper to provide a smoothed surface. The smoothed surface of the SUS plate was wiped with a hexane-acetone solvent mixture to achieve degreasing. The test piece was affixed to, with its adhesive layer, to the smoothed surface of the SUS plate, and a 2-kg hand roller was then reciprocated over the test piece. The test piece was aged for 20 minutes, and subsequently peeled with an Autograph AGS-100NX manufactured by SHIMADZU CORPORATION at an angle of 180° at a rate of 300 mm/min to measure peel strength Xb (N/25 mm).

[Change ratio of strength for peeling from SUS (surface roughness)]

From the peel strength Xa of the ultraviolet-curable acrylic polymer from the roughened surface and the peel strength Xb of the ultraviolet-curable acrylic polymer from the smoothed surface, which were measured in the Strength for peeling from SUS, a change ratio of strength for peeling from SUS was calculated with a formula below. Incidentally, when the change ratio of strength for peeling from SUS is more than 10% or less than -10%, the ultraviolet-curable acrylic polymer is evaluated as having low conformability to the surface roughness of the adherend.

```
Change ratio of strength for peeling from SUS (%)

= 100 × (Xb - Xa)/Xa
```

EP 3 666 806 A1

**[Strength for peeling from SUS (heating)]**

The ultraviolet-curable acrylic polymer before the heating and the ultraviolet-curable acrylic polymer after the heating were each applied onto a polyethylene terephthalate (PET) film so as to have a thickness of 20 μm. Subsequently, an ultraviolet irradiation apparatus (manufactured by Heraeus (originally, Fusion UV Systems Inc.), trade name "Light Hammer 6" (employing H bulb)) was used to irradiate the ultraviolet-curable acrylic polymer with ultraviolet radiation (UV-C) at a UV-C irradiation intensity of about 48 mW/cm$^2$ and an accumulated exposure of about 60 mJ/cm$^2$ to cure the ultraviolet-curable acrylic polymer. Thus, a test film was produced in which the adhesive layer having a thickness of 20 μm was disposed on and integrated with the polyethylene terephthalate film. The test film was cut into a width of 25 mm to produce a test piece. An SUS plate was prepared. Thu surface of this SUS plate was polished with #240 waterproof sandpaper, and subsequently wiped with a hexane-acetone solvent mixture to achieve degreasing. The test piece was affixed to, with its adhesive layer, the surface of the SUS plate, and a 2-kg hand roller was then reciprocated over the test piece. The test piece was aged for 20 minutes, and subsequently peeled with an Autograph AGS-100NX manufactured by SHIMADZU CORPORATION at an angle of 180° at a rate of 300 mm/min to measure peel strength (N/25 mm).

**[Change ratio of strength for peeling from SUS (heating)]**

From a peel strength Xc of the ultraviolet-curable acrylic polymer before the heating, and a peel strength Xd of the ultraviolet-curable acrylic polymer after the heating, which were measured in the Strength for peeling from SUS, a change ratio of strength for peeling from SUS was calculated with a formula below. Incidentally, when the change ratio of strength for peeling from SUS is more than 10% or less than - 10%, the ultraviolet-curable acrylic polymer is evaluated as having low thermal stability.

```
Change ratio of strength for peeling from SUS (%)

      = 100 × (Xd - Xc)/Xc
```

**[Adhesive splitting on SUS]**

After the ultraviolet-curable acrylic polymer before the heating was measured in terms of the strength for peeling from SUS, the surface of the SUS plate was visually inspected, and evaluation was performed on the basis of the following system.

A (excellent): adhesive splitting of the ultraviolet-curable acrylic polymer did not occur at all on the surface of the SUS plate, and the cohesive strength did not have any problem.
B (good): adhesive splitting of the ultraviolet-curable acrylic polymer slightly occurred on the surface of the SUS plate to such an extent that the cohesive strength did not have any problem.
C (poor): adhesive splitting of the ultraviolet-curable acrylic polymer occurred all over the surface of the SUS plate, and the cohesive strength had a problem.

**[Melt viscosity]**

The ultraviolet-curable acrylic polymer before the heating was measured in terms of melt viscosity of the ultraviolet-curable acrylic polymer at 130°C in accordance with JIS K 6862. The evaluation was performed in accordance with the following system.

A (excellent): the viscosity was less than 45 Pa·s, and excellent hot-melt coatability was exhibited.
B (good): the viscosity was 45 to 70 Pa·s, and good hot-melt coatability was exhibited.
C (poor): the viscosity was more than 70 Pa·s, and poor hot-melt coatability was exhibited.

[Table 1]

| | | | Example | | | | | |
|---|---|---|---|---|---|---|---|---|
| | | | 1 | 2 | 3 | 4 | 5 | 6 |
| Formulation of polymerization [parts by mass] | Monomer | Butyl acrylate (BA) | 94.80 | 70.00 | 94.80 | 94.80 | 94.80 | 94.80 |
| | | 2-Ethylhexyl acrylate (2EHA) | 0 | 24.77 | 0 | 0 | 0 | 0 |
| | | Acrylic acid (AAc) | 5.00 | 5.00 | 5.00 | 5.00 | 5.00 | 5.00 |
| | | $\beta$-Carboxyethyl acrylate ($\beta$CEA) | 0 | 0 | 0 | 0 | 0 | 0 |
| | Ultraviolet reactive group-containing monomer | 4-Acryloyloxybenzophenone (BPA) | 0.20 | 0.23 | 0.20 | 0.20 | 0.20 | 0.20 |
| | Chain transfer agent | Lauryl mercaptan (LM) | 0.20 | 0.25 | 0 | 0 | 0 | 0 |
| | | Stearyl-3-mercaptopropionate (STMP) | 0 | 0 | 0.36 | 0 | 0 | 0 |
| | | Trimethylolpropane tris(3-mercaptopropionate) (TMMP) | 0 | 0 | 0 | 0.39 | 0 | 0 |
| | | Tris(3-mercaptopropionyloxy)ethyl isocyanurate (TEMPIC) | 0 | 0 | 0 | 0 | 0.52 | 0 |
| | | Pentaerythritol tetrakis(3-mercaptopropionate) (PEMP) | 0 | 0 | 0 | 0 | 0 | 0.48 |
| | | Dipentaerythritol hexakis(3-mercaptopropionate) (DPMP) | 0 | 0 | 0 | 0 | 0 | 0 |
| | | 2-Ethylhexyl-3-mercaptopropionate (EHMP) | 0 | 0 | 0 | 0 | 0 | 0 |
| | | 3-Methoxybutyl-3-mercaptopropionate (MBMP) | 0 | 0 | 0 | 0 | 0 | 0 |
| | | Isopropanol (IPA) | 0 | 0 | 0 | 0 | 0 | 0 |
| | | Methyl ethyl ketone (MEK) | 0 | 0 | 0 | 0 | 0 | 0 |

(continued)

| | | | Example | | | | | |
|---|---|---|---|---|---|---|---|---|
| | | | 1 | 2 | 3 | 4 | 5 | 6 |
| Evaluation results | Initial weight-average molecular weight | | 182,166 | 187,368 | 183,125 | 161,251 | 159,327 | 178,072 |
| | Post-heating weight-average molecular weight | | 196,622 | 205,632 | 204,666 | 166,074 | 165,554 | 179,099 |
| | Change ratio (%) of weight-average molecular weight | | 7.9 | 9.7 | 11.8 | 3.0 | 3.9 | 0.6 |
| | Molecular-weight distribution (Mw/Mn) | | 4.2 | 4.5 | 4.2 | 4.5 | 4.4 | 4.6 |
| | Primary displacement (mm) | | 59.03 | 108.59 | 61.53 | 65.01 | 70.57 | 64.90 |
| | Tensile-shear strain $\tan\theta$ | | 2.95 | 5.43 | 3.08 | 3.25 | 3.53 | 3.25 |
| | Gel fraction (mass%) | | 64 | 65 | 61 | 63 | 63 | 64 |
| | Strength for peeling from SUS (surface roughness) (N/25 mm) | Roughened surface | 11.4 | 14.1 | 11.8 | 13.9 | 14.5 | 13.7 |
| | | Smoothed surface | 12.1 | 14.7 | 12.5 | 14.7 | 15.6 | 14.6 |
| | Change ratio of strength for peeling from SUS (surface roughness) | | 5.8% | 4.1% | 5.6% | 5.4% | 7.1% | 6.2% |
| | Strength for peeling from SUS (heating) (N/25 mm) | Before heating | 12.1 | 14.7 | 12.5 | 14.7 | 15.6 | 14.6 |
| | | After heating | 12.0 | 15.5 | 12.3 | 14.8 | 15.2 | 14.2 |
| | Change ratio of strength for peeling from SUS (heating) | | -0.8% | 5.4% | -1.6% | 0.7% | -2.6% | -2.7% |
| | Adhesive splitting on SUS | | A | A | A | B | B | B |
| | Melt viscosity | | B | A | B | A | A | A |

[Table 2]

| | | | Example | | | | |
|---|---|---|---|---|---|---|---|
| | | | 7 | 8 | 9 | 10 | 11 |
| Formulation of polymerization [parts by mass] | Monomer | Butyl acrylate (BA) | 94.80 | 94.70 | 94.85 | 94.72 | 94.80 |
| | | 2-Ethylhexyl acrylate (2EHA) | 0 | 0 | 0 | 0 | 0 |
| | | Acrylic acid (AAc) | 5.00 | 5.00 | 5.00 | 5.00 | 0 |
| | | β-Carboxyethyl acrylate (βCEA) | 0 | 0 | 0 | 0 | 5.00 |
| | Ultraviolet reactive group-containing monomer | 4-Acryloyloxybenzophenone (BPA) | 0.20 | 0.30 | 0.15 | 0.28 | 0.20 |
| | Chain transfer agent | Lauryl mercaptan (LM) | 0 | 0.20 | 0.20 | 0.20 | 0.20 |
| | | Stearyl-3-mercaptopropionate (STMP) | 0 | 0 | 0 | 0 | 0 |
| | | Trimethylolpropane tris(3-mercaptopropionate) (TMMP) | 0 | 0 | 0 | 0 | 0 |
| | | Tris(3-mercaptopropionyloxy)ethyl isocyanurate (TEMPIC) | 0 | 0 | 0 | 0 | 0 |
| | | Pentaerythritol tetrakis(3-mercaptopropionate) (PEMP) | 0 | 0 | 0 | 0 | 0 |
| | | Dipentaerythritol hexakis(3-mercaptopropionate) (DPMP) | 0.77 | 0 | 0 | 0 | 0 |
| | | 2-Ethylhexyl-3-mercaptopropionate (EHMP) | 0 | 0 | 0 | 0 | 0 |
| | | 3-Methoxybutyl-3-mercaptopropionate (MBMP) | 0 | 0 | 0 | 0 | 0 |
| | | Isopropanol (IPA) | 0 | 0 | 0 | 0 | 0 |
| | | Methyl ethyl ketone (MEK) | 0 | 0 | 0 | 0 | 0 |

EP 3 666 806 A1

| | | | Example | | | | |
|---|---|---|---|---|---|---|---|
| | | | 7 | 8 | 9 | 10 | 11 |
| Evaluation results | Initial weight-average molecular weight | | 217,666 | 185,562 | 184,434 | 179,488 | 175,431 |
| | Post-heating weight-average molecular weight | | 215,410 | 196,188 | 196,399 | 191,822 | 192,357 |
| | Change ratio (%) of weight-average molecular weight | | -1.0 | 5.7 | 6.5 | 6.9 | 9.6 |
| | Molecular-weight distribution (Mw/Mn) | | 5.2 | 4.2 | 4.3 | 4.3 | 4.7 |
| | Primary displacement (mm) | | 49.42 | 42.13 | 128.87 | 51,66 | 81.82 |
| | Tensile-shear strain $\tan\theta$ | | 2.47 | 2.11 | 6.44 | 2.58 | 4.09 |
| | Gel fraction (mass%) | | 67 | 69 | 56 | 67 | 62 |
| | Strength for peeling from SUS | Roughened surface | 13.7 | 11.2 | 21.1 | 11.1 | 10.3 |
| | (surface roughness) (N/25 mm) | Smoothed surface | 15.0 | 12.3 | 21.5 | 12.1 | 10.8 |
| | Change ratio of strength for peeling from SUS (surface roughness) | | 8.7% | 8.9% | 1.9% | 8.3% | 4.6% |
| | Strength for peeling from SUS | Before heating | 15.0 | 12.3 | 21.5 | 12.1 | 10.8 |
| | (heating) (N/25 mm) | After heating | 14.6 | 11.8 | 23.0 | 11.3 | 10.1 |
| | Change ratio of strength for peeling from SUS (heating) | | -2.7% | -4.1% | 7.0% | -6.6% | -6.5% |
| | Adhesive splitting on SUS | | B | A | B | A | B |
| | Melt viscosity | | A | B | B | B | B |

EP 3 666 806 A1

[Table 3]

(continued)

|  | Comparative example | | | | | | | |
|---|---|---|---|---|---|---|---|---|
|  | 1 | 2 | 3 | 4 | 5 | 6 | 7 | 8 |

(continued)

| | | | Comparative example | | | | | | | |
| --- | --- | --- | --- | --- | --- | --- | --- | --- | --- | --- |
| | | | 1 | 2 | 3 | 4 | 5 | 6 | 7 | 8 |
| Formulation of polymerization [parts by mass] | Monomer | Butyl acrylate (BA) | 94.60 | 94.87 | 99.80 | 47.30 | 94.80 | 94.80 | 94.80 | 94.80 |
| | | | Comparative example | | | | | | | |
| | | | 1 | 2 | 3 | 4 | 5 | 6 | 7 | 8 |
| | | 2-Ethylhexyl acrylate (2EHA) | 0 | 0 | 0 | 47.30 | 0 | 0 | 0 | 0 |
| | | | Comparative example | | | | | | | |
| | | | 1 | 2 | 3 | 4 | 5 | 6 | 7 | 8 |
| | | Acrylic acid (AAc) | 5.00 | 5.00 | 0 | 5.00 | 5.00 | 5.00 | 5.00 | 5.00 |
| | | β-Carboxyethyl acrylate (βCEA) | 0 | 0 | 0 | 0 | 0 | 0 | 0 | 0 |
| | Ultraviolet reactive group-containing monomer | 4-Acryloyloxybenzophenone (BPA) | 0.40 | 0.13 | 0.20 | 0.40 | 0.20 | 0.20 | 0.20 | 0.20 |
| | Chain transfer agent | Lauryl mercaptan (LM) | 0.29 | 0.29 | 0.29 | 0.29 | 0 | 0 | 0 | 0 |
| | | Stearyl-3-mercaptopropionate (STMP) | 0 | 0 | 0 | 0 | 0 | 0 | 0 | 0 |
| | | Trimethylolpropane tris(3-mercaptopropionate) (TMMP) | 0 | 0 | 0 | 0 | 0 | 0 | 0 | 0 |
| | | Tris(3-mercaptopropionyloxy) ethyl isocyanurate (TEMPIC) | 0 | 0 | 0 | 0 | 0 | 0 | 0 | 0 |
| | | Pentaerythritol tetrakis(3-mercaptopropionate) (PEMP) | 0 | 0 | 0 | 0 | 0 | 0 | 0 | 0 |
| | | Dipentaerythritol hexakis (3-mercaptopropionate) (DPMP) | 0 | 0 | 0 | 0 | 0 | 0 | 0 | 0 |

(continued)

| | | | Comparative example | | | | | | | |
|---|---|---|---|---|---|---|---|---|---|---|
| | | | 1 | 2 | 3 | 4 | 5 | 6 | 7 | 8 |
| Evaluation results | Initial weight-average molecular weight | | 164,564 | 166,764 | 163,406 | 161,586 | 176,454 | 180,667 | 146,588 | 177,510 |
| | | | Comparative example | | | | | | | |
| | | | 1 | 2 | 3 | 4 | 5 | 6 | 7 | 8 |
| | Post-heating weight-average molecular weight | | 176,863 | 176,543 | 165,679 | 309,567 | 259,832 | 273,425 | 206,454 | 328,557 |
| | Change ratio (%) of weight-average molecular weight | | 7.5 | 5.9 | 1.4 | 91.6 | 47.3 | 51.3 | 40.8 | 85.1 |
| | Molecular-weight distribution (Mw/Mn) | | 3.9 | 4.0 | 4.6 | 4.3 | 4.6 | 4.4 | 5.1 | 5.5 |
| | Primary displacement (mm) | | 20.16 | 185.30 | 253.32 | 33.68 | 60.26 | 63.19 | 58.74 | 66.84 |
| | Tensile-shear strain $\tan\theta$ | | 1.01 | 9.27 | 12.67 | 1.68 | 3.01 | 3.16 | 2.94 | 3.34 |
| | Gel fraction (mass%) | | 72 | 53 | 61 | 63 | 64 | 64 | 58 | 62 |
| | Strength for peeling from SUS (surface roughness) (N/25 mm) | Roughened surface | 9.2 | 23.3 | 4.5 | 10.1 | 11.8 | 11.0 | 13.2 | 11.7 |
| | | Smoothed surface | 10.9 | 23.5 | 5.3 | 11.8 | 12.7 | 11.9 | 13.7 | 12.3 |
| | Change ratio of strength for peeling from SUS (surface rouahness) | | 15.6% | 0.9% | 15.1% | 14.4% | 7.1% | 7.6% | 3.6% | 4.9% |
| | Strength for peeling from SUS (heating) (N/25 mm) | Before heating | 10.9 | 23.5 | 5.3 | 11.8 | 12.7 | 11.9 | 13.7 | 12.3 |
| | | After heating | 11.6 | 21.5 | 4.9 | 9.9 | 10.8 | 10.1 | 11.8 | 10.3 |
| | Change ratio of strength for peeling from SUS (heating) | | 6.4% | -8.5% | -7.5% | -16.1% | -15.0% | -15.1% | -13.9% | -16.3% |
| | Adhesive splitting on SUS | | A | C | A | A | A | A | A | A |
| | Melt viscosity | | A | A | A | A | B | B | B | C |

[Table 4]

| | | | Comparative example | |
|---|---|---|---|---|
| | | | 9 | 10 |
| Formulation of polymerization[parts by mass] | Monomer | Butyl acrylate (BA) | 94.80 | 70.00 |
| | | 2-Ethylhexyl acrylate (2EHA) | 0 | 24.77 |
| | | Acrylic acid (AAc) | 5.00 | 5.00 |
| | | $\beta$-Carboxyethyl acrylate ($\beta$CEA) | 0 | 0 |
| | Ultraviolet reactive group-containing monomer | 4-Acryloyloxybenzophenone (BPA) | 0.20 | 0.23 |
| | Chain transfer agent | Lauryl mercaptan (LM) | 0.23 | 0.22 |
| | | Stearyl-3-mercaptopropionate (STMP) | 0 | 0 |
| | | Trimethylolpropane tris(3-mercaptopropionate) (TMMP) | 0 | 0 |
| | | Tris(3-mercaptopropionyloxy)ethyl isocyanurate (TEMPIC) | 0 | 0 |
| | | Pentaerythritol tetrakis(3-mercaptopropionate) (PEMP) | 0 | 0 |
| | | Dipentaerythritol hexakis(3-mercaptopropionate) (DPMP) | 0 | 0 |
| | | 2-Ethylhexyl-3-mercaptopropionate (EHMP) | 0 | 0 |
| | | 3-Methoxybutyl-3-mercaptopropionate (MBMP) | 0 | 0 |
| | | Isopropanol (IPA) | 0 | 0 |
| | | Methyl ethyl ketone (MEK) | 0 | 0 |
| Evaluation results | Initial weight-average molecular weight | | 175,413 | 198,543 |
| | Post-heating weight-average molecular weight | | 184,458 | 222,545 |
| | Change ratio (%) of weight-average molecular weight | | 5.2 | 12.1 |
| | Molecular-weight distribution (Mw/Mn) | | 4.0 | 6.2 |
| | Primary displacement (mm) | | 64.22 | 127.67 |
| | Tensile-shear strain tan$\theta$ | | 3.21 | 6.38 |
| | Gel fraction (mass%) | | 63 | 58 |
| | Strength for peeling from SUS (surface roughness) (N/25 mm) | Roughened surface | 11.9 | 17.7 |
| | | Smoothed surface | 13.3 | 18.2 |
| | Change ratio of strength for peeling from SUS (surface roughness) | | 10.5% | 2.7% |
| | Strength for peeling from SUS (heating) (N/25 mm) | Before heating | 13.3 | 18.2 |
| | | After heating | 13.0 | 16.9 |
| | Change ratio of strength for peeling from SUS (heating) | | -2.3% | -7.1% |
| | Adhesive splitting on SUS | | A | C |
| | Melt viscosity | | B | A |

[Table 5]

| Elapsed time | Examples 1 and 3 to 11 and Comparative examples 1 to 4, 7, and 9 | | Example 2 and Comparative examples 5, 6, and 8 | Comparative example 10 |
|---|---|---|---|---|
| | PERHEXYLO | PERHEXYL PV | PERHEXYL PV | PERHEXYL PV |
| Start of radical polymerization | 0.002 | - | 0.0005 | 0.0005 |
| After lapse of 30 min from start of radical polymerization | 0.005 | - | 0.001 | 0.0005 |
| After lapse of 1 h from start of radical polymerization | - | - | 0.001 | 0.0005 |
| After lapse of 1 h and 30 min from start of radical polymerization | - | 0.009 | 0.001 | - |
| After lapse of 2 h from start of radical polymerization | - | 0.009 | 0.002 | 0.15 |
| After lapse of 2 h and 30 min from start of radical polymerization | - | 0.018 | 0.002 | - |
| After lapse of 3 h from start of radical polymerization | - | 0.018 | 0.005 | - |
| After lapse of 3 h and 30 min from start of radical polymerization | - | 0.045 | 0.005 | - |
| After lapse of 4 h from start of radical polymerization | - | 0.136 | 0.05 | - |
| After lapse of 4 h and 30 min from start of radical polymerization | - | 0.545 | 0.2 | 0.2 |
| After lapse of 5 h from start of radical polymerization | - | - | 0.5 | 0.5 |

(Cross-reference to related application)

The present application claims the priority under Japanese Patent Application No. 2017-154808 filed on August 9, 2017, the disclosure of which is hereby incorporated in its entirety by reference.

Industrial Applicability

The ultraviolet-curable acrylic polymer exhibits excellent adhesive properties irrespective of the surface roughness of an adherend, does not require a stabilizing agent, and exhibits excellent thermal stability in a molten state and excellent coatability. The ultraviolet-curable acrylic polymer cured by irradiation with ultraviolet radiation exhibits desired adhesive properties. The ultraviolet-curable acrylic polymer is suitably usable as an ultraviolet-curable hot-melt adhesive.
The ultraviolet-curable acrylic polymer exhibits excellent adhesive properties irrespective of the material and surface roughness of an adherend. Thus, the ultraviolet-curable acrylic polymer exhibits excellent adhesive properties for containers formed of a wide variety of materials, having various types of decoration on the surfaces, and having various surface roughnesses, and is suitably usable as a moisture-curable hot-melt adhesive constituting consumer product labels.

## Claims

1.  An ultraviolet-curable acrylic polymer comprising: 89.65 to 99.75 mass% of a (meth)acrylate unit not intramolecularly having an ultraviolet reactive group or a carboxy group; and 0.15 to 0.35 mass% of a monomer unit intramolecularly having an ultraviolet reactive group,

the polymer containing 70 mass% or more of a (meth)acrylate unit serving as a main unit of the (meth)acrylate unit not intramolecularly having an ultraviolet reactive group or a carboxy group,

the polymer having, at an end, a residue of a thiol compound serving as a chain transfer agent, having a molecular-weight distribution of 4.1 to 6.1, being crosslinkable by irradiation with ultraviolet radiation, exhibiting a post-ultraviolet-curing gel fraction of 55 to 70 mass%, exhibiting a change ratio of -20% to 20% in terms of standard-polystyrene-equivalent weight-average molecular weight after heating at 150°C for 6 hours, and exhibiting a post-ultraviolet-curing tensile-shear strain tanθ of 2.0 to 6.5.

2. The ultraviolet-curable acrylic polymer according to Claim 1, having a molecular-weight distribution of 4.2 to 6.0.

3. The ultraviolet-curable acrylic polymer according to Claim 1, wherein the polymer further contains 0.1 to 10 mass% of a monomer unit having a carboxy group and a radical-polymerizable unsaturated double bond.

4. The ultraviolet-curable acrylic polymer according to Claim 1, wherein the monomer unit intramolecularly having an ultraviolet reactive group is a (meth)acrylate intramolecularly having an ultraviolet reactive group.

5. The ultraviolet-curable acrylic polymer according to Claim 1, wherein the monomer unit intramolecularly having an ultraviolet reactive group is a (meth)acrylate intramolecularly having a benzophenone group.

6. The ultraviolet-curable acrylic polymer according to Claim 5, wherein the (meth)acrylate intramolecularly having a benzophenone group is 4-acryloyloxybenzophenone.

7. The ultraviolet-curable acrylic polymer according to Claim 1, wherein the chain transfer agent is a thiol compound that does not have, in its molecular structure, a tertiary carbon, an alkoxy group, a hydroxy group, a keto group, or a structure in which a thiol group is directly bonded to a secondary carbon.

8. An ultraviolet-curable hot-melt adhesive comprising the ultraviolet-curable acrylic polymer according to Claim 1.

9. A method for producing an ultraviolet-curable acrylic polymer, the method comprising polymerizing, in the presence of a thiol compound serving as a chain transfer agent, a monomer composition containing 89.65 to 99.75 mass% of a (meth)acrylate not intramolecularly having an ultraviolet reactive group or a carboxy group, and 0.15 to 0.35 mass% of a monomer intramolecularly having an ultraviolet reactive group to produce the polymer having a molecular-weight distribution of 4.1 to 6.1, the monomer composition containing 70 mass% or more of a (meth)acrylate serving as a main (meth)acrylate of the (meth)acrylate not intramolecularly having an ultraviolet reactive group or a carboxy group.

10. The method for producing an ultraviolet-curable acrylic polymer according to Claim 9, wherein the polymer has a molecular-weight distribution of 4.2 to 6.0.

11. The method for producing an ultraviolet-curable acrylic polymer according to Claim 9, wherein the monomer composition further contains 0.1 to 10 mass% of a monomer having a carboxy group and a radical-polymerizable unsaturated double bond.

12. The method for producing an ultraviolet-curable acrylic polymer according to Claim 9, wherein the chain transfer agent is a thiol compound that does not have, in its molecular structure, a tertiary carbon, an alkoxy group, a hydroxy group, a keto group, or a structure in which a thiol group is directly bonded to a secondary carbon.

EP 3 666 806 A1

**INTERNATIONAL SEARCH REPORT**

| International application No. |
| PCT/JP2018/024013 |

### A. CLASSIFICATION OF SUBJECT MATTER

Int.Cl. C08F220/18(2006.01)i, C08F2/38(2006.01)i, C08F2/48(2006.01)i, C09J4/02(2006.01)i, C09J133/14(2006.01)i

According to International Patent Classification (IPC) or to both national classification and IPC

### B. FIELDS SEARCHED

Minimum documentation searched (classification system followed by classification symbols)
Int.Cl. C08F220/18, C08F2/38, C08F2/48, C09J4/02, C09J133/14

| Documentation searched other than minimum documentation to the extent that such documents are included in the fields searched | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| P, X | WO 2017/138609 A1 (SEKISUI FULLER COMPANY, LTD.) 17 August 2017, claims, examples 3-8 & TW 201739883 A | 1-12 |
| A | WO 2016/093206 A1 (SEKISUI FULLER COMPANY, LTD.) 16 June 2016, claims, examples 5-7 & TW 201631093 A | 1-12 |

☒ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 September 2018 (12.09.2018) | 25 September 2018 (25.09.2018) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

25

**INTERNATIONAL SEARCH REPORT**

| International application No. |
| --- |
| PCT/JP2018/024013 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2000-501764 A (MINNESOTA MINING AND MANUFACTURING COMPANY) 15 February 2000, claim 9, examples 2, 4, 5 & US 5637646 A (claim 22, examples 2, 4, 5) & WO 1997/021736 A1 | 1-12 |
| A | JP 2017-39856 A (3M INNOVATIVE PROPERTIES CO.) 23 February 2017, claim 1, example 1 (in particular, paragraph [0054]) (Family: none) | 1-12 |
| A | JP 2015-535030 A (3M INNOVATIVE PROPERTIES CO.) 07 December 2015, claims, paragraphs [0166]-[0190] & US 2016/0289514 A1 (claims, paragraphs [0164]-[0188]) & WO 2014/078123 A1 & CN 104797673 A | 1-12 |

Form PCT/ISA/210 (continuation of second sheet) (January 2015)

**EP 3 666 806 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006299017 A
- JP 2001253995 A
- JP 2017154808 A